# EUROPEAN PATENT SPECIFICATION

(11) **EP 2 478 311 B1**
(45) Date of publication and mention of the grant of the patent: **31.07.2019**
(21) Application number: 10754731.7
(22) Date of filing: 15.09.2010
(51) Int. Cl.: H02J 3/00, F25J 1/02, F01D 15/04, H02J 3/01

(54) **OFF-SHORE STRUCTURE COMPRISING TWO POWER SYSTEMS AND METHOD OF POWERING THE SAME**
OFF-SHORE-STRUKTUR MIT ZWEI STROMNETZEN UND HERSTELLUNGSVERFAHREN DAFÜR
STRUCTURE OFFSHORE COMPRENANT DEUX SYSTÈMES D'ALIMENTATION ET SON PROCÉDÉ DE FABRICATION

(30) Priority: 17.09.2009 EP 09170594
(43) Date of publication of application: 25.07.2012
(73) Proprietor: Shell Internationale Research Maatschappij B.V., 2596 HR The Hague (NL)
(72) Inventor: DESAI, Shailesh, NL-2596 HR The Hague (NL)
(74) Representative: Shell Legal Services IP
(86) International application number: PCT/EP2010/063512
(87) International publication number: WO 2011/032958

(56) References cited:
- EP-A1- 2 006 492
- EP-A1- 2 042 743
- EP-A1- 2 076 952
- US-A1- 2006 222 523
- US-A1- 2009 208 294
- ENDREJAT F ET AL: "Soft Start/Adjustable Speed Systems for Multiple MW Rated Motors", PETROLEUM AND CHEMICAL INDUSTRY CONFERENCE, 2006. INDUSTRY APPLICATION S SOCIETY 53RD ANNUAL, IEEE, PI, 11 September 2006 (2006-09-11), pages 1-10, XP031507513, ISBN: 978-1-4244-0558-9

## Description

The present invention relates to an off-shore structure comprising an electrical power system and to methods of powering and using such an off-shore structure. The off-shore structure and methods are advantageous for the protection and reliable operation of electrical consumers on such a structure. The invention is particularly beneficial when the off-shore structure produces a cooled, preferably liquefied, hydrocarbon, such as liquefied natural gas (LNG).

Conventional sea going vessels, such as carriers, contain an electrical power generation and distribution system having electrical properties, such as frequency, voltage and phase rotation, which are designed to operate within strict limits based upon International Electrotechnical Commission (IEC) standards. This provides the reliable operation of electrical equipment on board the vessel. Such a system is referred to herein as a "clean electricity grid".

The function of many vessels has progressed beyond simple cargo transportation and expanded to provide manufacturing capabilities requiring complex plant equipment. For instance, the Floating Liquefaction, Storage and Off-loading (FLSO) concept combines a natural gas liquefaction process, storage tanks, loading systems and other infrastructure into a single floating unit. The Floating Liquefied Natural Gas (FLNG) concept is similar to that of the FLSO concept, but additionally provides natural gas treatment as well as the liquefaction process, storage tanks, loading systems and other infrastructure into a single floating structure.

Such concepts are advantageous because they provide off-shore alternatives to on-shore liquefaction plants. These vessels can be moored off the coast, or close to or at a gas field, in waters deep enough to allow off-loading of the LNG product onto a carrier vessel. They also represent movable assets, which can be relocated to a new site when the gas field is nearing the end of its productive life, or when required by economic, environmental or political conditions.

However, the provision of complex plant equipment on an off-shore structure can give rise to problems with the electrical generation and distribution system. For instance, starting devices, such as relatively large motors such as the compressor drivers used in a liquefaction process, can place a severe burden on the power system, requiring up to five times the full load current of these devices.

As well as the starting up of a motor or similar device, the tripping of a motor or a generator may also place a severe burden on the power system, in terms of frequency and voltage fluctuations. Such a power system having severe irregular changes in one or both of frequency and voltage is termed a "dirty grid", and may not meet IEC standards for voltage and frequency deviations. Many electrical consumers may not operate reliably, or be damaged as a result of operation with such a dirty grid.

These problems are particularly severe in those electricity grids in which power generating capacity is limited compared to the power demand from the electrical consumers. This electricity grid characteristic can be measured as the ratio of total power generation to total power consumption (PG:PC) at peak load in steady state operation. Ratios of PG:PC less than or equal to about 1.4 can particularly give rise to such problems.

Conventionally, this problem is solved by providing a clean electricity grid for all electrical consumers. This can be achieved by adding additional power generating capacity to supply the start up power required by large devices and/or adapting the power system consumers to tolerate voltage and frequency deviations, for example by adding electrical filters, transformers etc., at high CAPEX.

EP-2076952 discloses an electrical starting system for e.g. "bleedless" type airplane, with an electrical power architecture with no pneumatic circuits. The system has electrical distribution channels for high power loads specific to aircraft of "bleedless" type, and the electrical distribution channels for conventional loads, including technical loads, such as avionics, lighting, fuel pumps and commercial loads that are separated, and that are supplied with power by separate generators driven by the aircraft's engines. The channels are powered by generators, e.g. brushless three phase synchronous generator, where the channels for high power loads comprise rectifiers and inverters. The distribution channels are separated, so as to reduce the mass of filtering elements related to the rectifiers and the inverters. The rectifiers are simple and light in weight.

EP-2006492-A1 discloses an on-shore plant for compressing a gas or fluid, comprising high power compressors and an electric machine for each said compressor, in which the machine is arranged to drive the compressor. The plant comprises at least one electric generator and at least one gas turbine adapted to drive the generator for generating electric power for operation of said electric machine. The plant also comprises an apparatus adapted to adjust the frequency of the electric power of said electric machine operation, the apparatus comprising means adapted to control the frequency of the electric power by controlling the rotational speed of an output shaft of the gas turbines. The arrangement comprises a grid having two busbar sections which are connected to each other via a switch. Some of the generators are connected to one busbar section, and the other generators are connected to the second busbar section. The two busbar sections of the grid can be connected, so that phase, voltage and frequency characteristics are similar in the two busbar sections. The gas turbines connected to one busbar section are controlled by the same apparatus as the gas turbines connected to the other busbar section.

EP-2006492 discloses a method of running electric motors on a grid. However, the plant of EP-2006492 is not practical, since it is impossible to accelerate the electric motors from zero speed to steady-state running speed without additional equipment.

The present invention seeks to address one or more of the above problems associated with the operation of an electricity grid in an off-shore structure. This object is achieved by an off-shore structure and a method of powering an off-shore structure with the technical features of, respectively, independent claims 1 and 13. Advantageous embodiments are defined by the dependent claims.

The present invention is particularly beneficial in off-shore structures having plant power systems in which the ratio of total power generation: total power consumption (PG:PC) is less than or equal to 1.4, more preferably in the range of 1.4-1.0.

The structure intended for off-shore use may be, for example a vessel, platform or caisson. The manufacture of the structure may take place on-shore, off-shore or a combination of on-shore and off-shore. For instance the structure intended for off-shore use may be prepared in a dry dock, as long as upon completion the structure can be moved off-shore. Alternatively the manufacture may take place off-shore, in which case the structure intended for off-shore use will already be in a suitable form, for instance provided as a floating vessel, off-shore platform or caisson.

The off-shore structure according to the present invention enables a method of starting and running electric motors on a dirty grid. The invention provides an alternative method that enables electric motors to be accelerated from zero speed to running speed through the use of a dirty grid concept and a variable speed drive.

EP-2006492-A1 states that the means to control the frequency are intended to obtain the same voltage and frequency output as that supplied by the gas turbine generators. The two busbar sections in EP-2006492-A1 will need to have similar electrical characteristics in terms of voltage, fault level, current rating and, therefore, cannot be deemed separate power systems.

The present invention is unique since the variable speed drive is used for starting electric motors on the dirty grid. Namely, the separate clean grid in the present invention can have a lower fault rating and voltage level than the dirty grid. Furthermore, the clean grid will have different limits to frequency and voltage deviations than the dirty grid. The present invention comprises two power systems, "clean" and "dirty", both having separate control systems.

By providing an essential power system which is electrically segregated from the plant power system, it is possible to protect essential power system consumers, such as essential vessel systems like control, navigation, medium and low voltage drives and lighting, from power fluctuations arising from operation of the plant power system consumers such as high voltage drives like relatively large electric driver motors for compressors.

In this way, an essential power system can be provided as a clean grid, which meets IEC operating standards, ensuring the reliable operation of those devices on the essential power system. This can lead to CAPEX savings, because EPS consumers need not be modified to operate under a dirty grid or a dirty grid does not need to be modified to become a clean grid which would have resulted from inter-connection with plant consumers such as large electric driver motors.

For instance, when the plant power system comprises a synchronous electric motor, which can be used to drive a refrigerant compressor, it is not possible to start such a motor directly on-line (as an asynchronous motor) because of the settle-out pressure of the compressor. A variable speed drive system can be used to provide a gradual increase in voltage and frequency to bring the electric driver motor from a standstill to its operating speed. However, such a variable speed drive system may cause higher order harmonic distortions and commutation notching in the voltage signal resulting in a dirty grid which may adversely effect the operation of other power system consumers or damage electrical equipment. Sensitive power system consumers can be protected from such effects by placing them in a clean grid essential power system electrically segregated from the plant power system.

In a further example, the tripping of a plant power system consumer, such as a large compressor driver motor, can result in an immediate increase in the voltage and frequency of the power supply, producing a dirty grid unsuitable for certain power supply consumers. Similarly, the tripping of a plant power system electrical generator can result in an immediate and significant decrease in the frequency and voltage of the plant power supply, leading to a dirty grid.

It will also be apparent that the start-up of a large induction motor, which may have 20 MW or more operating power if used to drive a refrigerant compressor, may also lead to significant voltage and frequency fluctuations in the power supply, producing a dirty grid.

Power system consumers can thus be protected from the fluctuations associated with a dirty grid by placing them in a segregated essential power system. It is then only the plant power system consumers which may need to be designed to operate with a dirty grid. This allows the provision of a plant power system with a wider operating envelope than would have been possible under IEC standards.

The term "electrically segregated" as used herein in relation to two or more power systems is intended to mean that there is no electrical connection or inter-connection (with the exception of earthing and bonding) intended for the transfer of power between the specified power systems. Thus, electrically segregated power systems have no electrical connection or inter-connection, such that there is no possibility for power transfer between systems. For instance, such electrically segregated power systems would not be connected by a transformer and/or variable speed drive system.

Embodiments of the present invention will now be described by way of example only and with reference to the accompanying non-limited drawings in which:
Figure 1 is a diagrammatic scheme for an off-shore structure according to a first embodiment;
Figures 2a-2c are diagrammatic schemes showing alternative configurations for the plant power systems of the off-shore structure according to further embodiments; and
Figure 3 is a diagrammatic scheme of an off-shore structure according to another embodiment.

For the purpose of this description, a single reference number will be assigned to a line as well as a stream or electrical current carried in that line. The same reference numbers used in different Figures represent identical lines and streams.

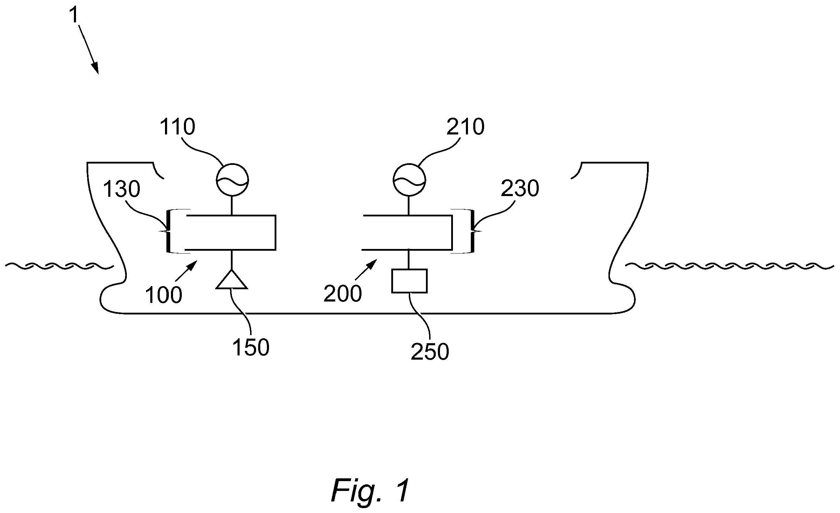

Figure 1 shows a diagrammatic scheme of an off-shore structure 1. As used herein, the term off-shore structure is intended to encompass any floating or non-floating structure located in a body of water such as a sea or lake. Such off-shore structures may for instance be located in water depths of 10 m or more, or 20 m or more. The term off-shore structure includes a floating vessel, an off-shore platform or a caisson.

In a preferred embodiment, the off-shore structure is a floating vessel as shown in the embodiment of Figure 1. A floating vessel may be any movable or moored vessel, generally at least having a hull, and usually being in the form of a ship such as a 'tanker'. Such floating vessels can be of any dimensions, but are usually elongate. Whilst the dimensions of a floating vessel are not limited at sea, building and maintenance facilities for floating vessels may limit such dimensions. Thus, in one embodiment, the floating vessel or off-shore platform is less than 600m long, such as 500m, and has a beam of less than 100m, such as 80m, so as to be able to be accommodated in existing ship-building and maintenance facilities.

The floating vessel can be a new build or a conversion from an existing vessel, such as a LNG carrier. In both embodiments, it is preferred to have a maximum separation between any high-pressure process equipment and the areas normally occupied by the crew. A new build is advantageous because it can be provided with a deck arrangement having a high pressure containment system (e.g. for natural gas liquefaction) in which it is easier to integrate process equipment, with the hull and accommodation structures being designed from the outset with the required features, such as blast strength, any cryogenic protection and fire divisions.

The off-shore structure may also be a gravity based structure, such as an off-shore platform. The off-shore platform may also be movable, but is generally more-permanently locatable than a floating vessel. An off-shore platform may also float, and may also have any suitable dimensions.

The off-shore structure 1 is provided with two electrically segregated power systems, an essential power system (EPS) 100 and a plant power system (PPS) 200.

As discussed above, the start up of high power electrical devices, such as large inductors or motors, e.g. compressor driver motors, can require up to five times the full load current. This can place a severe burden on the power system, leading to fluctuations in voltage and frequency producing a dirty grid which can be potentially damaging to electrical consumers.

In addition, the tripping of such high power electrical devices can result in an increase in the voltage and frequency of the power supply, producing a dirty grid rendering the power system unsuitable for use with certain electrical consumers.

Furthermore, the tripping of one or more of the electrical generators supplying the power system can result in an abrupt decrease in the voltage and frequency of the power supply, producing a dirty grid with adverse consequences for certain electrical consumers.

The off-shore structure 1 and method disclosed herein overcome the problems of the effects of such dirty grids on sensitive electrical devices by providing at least two electrically segregated power systems. The essential power system 100 is used to power those electrical consumers which may be affected by one or both of the voltage and frequency deviations which can occur in a dirty grid. The plant power system 200 is used to power those electrical consumers whose operation may produce a dirty grid, those devices which can tolerate the supply of electrical power from a dirty grid, and/or those devices which have been adapted for use with a dirty grid.

The essential power system 100 is a clean electricity grid which supplies power to those consumers essential to the safe operation of the off-shore structure 1 and/or those consumers which are sensitive to one or both of voltage and frequency fluctuations which could be damaged or operate unreliably by excessive variations in these properties. As such, the essential power system 100 can be designed to operate within strict limits based upon International Electrotechnical Commission (IEC) standards.

The essential power system 100 comprises at least one essential power system electrical generator 110. The EPS electrical generator 110 is electrically connected to an essential power system distribution system 130. The EPS distribution system 130 is electrically connected to at least one essential power system consumer 150.

For simplicity, Figure 1 shows only a single EPS electrical generator 110 and a single EPS consumer 150.

The at least one EPS electrical generator 110 may be an alternating current generator. There may be a plurality of EPS electrical generators, such as 3-6, more preferably 4 generators. Each electrical generator may have the same or different electricity generating capacity, for instance in the range of 5-20 MW, more preferably 8 MW. In one embodiment, four 8 MW EPS electrical generators 110 may be present, providing 32 MW power for the EPS consumers 150, such as the critical systems of the off-shore structure 1.

The EPS distribution system 130 connects the at least one EPS electrical generator 110 to the at least one EPS consumer 150 throughout the off-shore structure 1. The EPS distribution system 130 may be a radial distribution network. Such a distribution system is known to the skilled person.

The at least one essential power system consumer 150 can be one or more of a number of electrical devices. EPS consumers 150 include for instance the control, communication, any navigation, medium and low voltage drives and lighting systems of the off-shore structure 1.

As used herein, low voltage drives are those with a voltage of 1000 V or less. Medium voltage drives are those with a voltage in the range of greater than 1000 V to less than or equal to 7.2 kV. High voltage drives are those in the range of greater than 7.2 kV.

Low voltage drive consumers include, for example, pump motors having a power of about 2 kW, such as a generator lube oil pump motor, and pump motors having a power of about 100 kW, such as a hull cooling water pump motor.

Medium voltage drive consumers include, for example, compressor motors having a power of about 1200 kW, such as an end flash gas compressor motor, and pump motors having a power of about 700 kW, such as a sea water inlet pump motor.

High voltage drive consumers include, for example, compressor motors having a power of 10 MW or more, or for instance about 30 MW, such as a refrigerant compressor motor, for instance for a natural gas liquefaction system.

The plant power system (PPS) 200 supplies power to those consumers likely to cause excessive variations in one or both of the voltage and frequency. Such consumers include high voltage drive consumers like relatively large inductors or motors. The plant power system may be a so-called dirty grid.

The plant power system 200 comprises at least one plant power system electrical generator 210. The PPS electrical generator 210 is electrically connected to a plant power system distribution system 230. The PPS distribution system 230 is electrically connected to at least one plant power system consumer 250.

For simplicity, Figure 1 shows only a single PPS electrical generator 210 and a single PPS consumer 250.

The at least one PPS electrical generator 210 may be an alternating current generator. There may be a plurality of PPS electrical generators 210, such as 4-8, more preferably 6 generators. Each PPS electrical generator 210 may have the same or different electricity generating capacity, for instance in the range of 10-25 MW, more preferably 18 MW. In a practical embodiment, six 18 MW EPS electrical generators 110 may be present, providing 108 MW power for the PPS consumers 250 of the off-shore structure 1. The at least one PPS electrical generator 210 is generally of larger capacity than the EPS electrical generator 110.

The PPS distribution system 230 connects the at least one PPS electrical generator 210 to the at least one PPS consumer 250 throughout the off-shore structure 1. For instance, the PPS distribution system 230 may be a radial distribution network. Such a distribution system is known to the skilled person.

The at least one plant power system consumer 250 can be one or more of a number of electrical devices. PPS consumers 250 include, for instance, high voltage drive consumers. For instance such devices can have full load power requirements of at least 10 MW. For example, the PPS consumer 250 may be one or more large electrical driver motors, for example with powers in the range of 20 to 40 MW, more preferably 30 MW. In one embodiment, the PPS consumers 250 comprise three 30 MW electrical driver motors requiring a total power of 90 MW during steady state operation.

It is apparent that the power generation requirements of the plant power system 200 may be significantly larger than those of the essential power system 100. For instance, the full load power requirements of the PPS 200 may be at least a factor of 1.5, for instance at least a factor of 2, for example at least a factor of 3, times greater than the full load power requirements of the EPS 100.

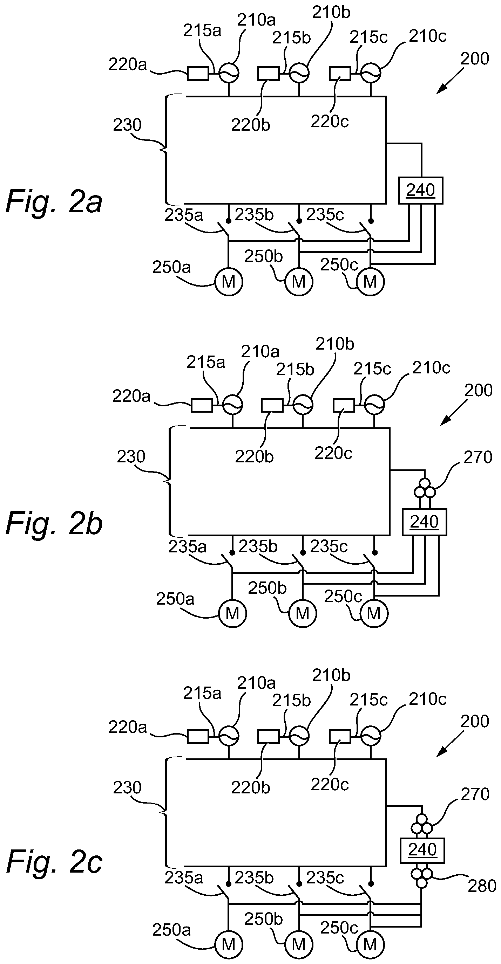

In a preferred embodiment, the at least one PPS consumer 250 comprises one or more asynchronous electric motors. Asynchronous electric motors are advantageous because they can be started direct on-line. A synchronous electric motor, in contrast to an asynchronous electric motor, requires the manipulation of the voltage and frequency characteristics of the PPS distribution system 230 at the motor terminals for high torque applications. The discussion of the operation of synchronous motors as PPS consumers 250 is discussed in detail in relation to the embodiments of Figures 2a-c.

The asynchronous electric motor may be a driver for one or more compressors (not shown), such as refrigerant compressors. Thus, in one embodiment a method of starting up a compressor in an off-shore structure 1 is disclosed, the method comprising at least the step of starting the asynchronous electric motor 250 directly on-line.

The severity of the impact of high power PPS consumers 250 on the power characteristics of the plant power system 200 can depend upon a number of factors. Dirty grids may occur when there is little excess power generating capacity in the PPS 200. For instance, plant power systems 200 in which the ratio of (total power generation of the at least one PPS generator 210): (total full load power consumption of the at least one PPS consumer 250) is less than or equal to 1.4, such as in the range of 1.4-1.0 or even about 1.2-1.0, can be susceptible to undesired voltage and frequency fluctuations. The ratio of (total power generation of the at least one PPS generator 210): (total full load power consumption of the at least one PPS consumer 250) in one instance may not be less than 1.0.

In addition, dirty grids may occur when the size of one or more of the at least one PPS consumer 250 is large compared to the total power generating capacity of the at least one PPS electrical generator 210. For instance, plant power systems 200 having at least one PPS consumer 250 with a full load power consumption of at least 10%, more preferably at least 20%, still more preferably at least about 30%, of the total power generation of the at least one PPS generator 210, can be susceptible to undesired voltage and frequency fluctuations.

Figures 2a-c show diagrammatic schemes of four different embodiments of the plant power system 200 which can be used in the off-shore structure and methods disclosed herein.

The plant power systems 200 shown in Figures 2a-c comprise three PPS electrical generators 210a, b, c. The PPS electrical generators 210a, b, c can be alternating current generators. Each PPS electrical generator 210a, b, c is mechanically driven by a prime mover, such as a plant power system driver 220a, b, c via a plant power system drive shaft 215a, b, c. In a preferred embodiment, the plant power system driver 220a, b, c may be selected from one or more of a dual fuel engine, a gas turbine and a steam turbine.

The PPS electrical generators 210a, b, c are electrically connected to a plant power system distribution system 230. The PPS distribution system 230 is connected to three PPS consumers 250a, b, c via PPS consumer distribution switches 235a, b, c respectively.

The embodiments of Figures 2a-c are particularly useful when one or more of the PPS consumers are large electric motors which cannot be started direct on-line. For instance, the one or more PPS consumers may comprise synchronous motors 250a, b, c. Depending upon the characteristic of the power supply, it may not be possible to start synchronous motors 250a, b, c directly on-line. This is because such alternating current electric motors run at speeds determined by the number of poles in the motor and the frequency of the alternating current supply. The frequency of the alternating current supply will be determined by the three PPS electrical generators 210a, b, c.

Synchronous motors 250a, b, c are provided with several sets of poles, which can be chosen to give one of several different operating speeds. However, the number of different speeds available is limited by the multiple sets of windings in the motor. For instance, for high starting torque applications, a two pole, 60 Hz 3600 rpm synchronous turbo motor cannot be started direct on-line. Such a two pole motor does not contain sufficient space to contain induction windings and would require to be accelerated from 0 rpm to the operating speed of 3600 rpm against the starting load. For example, when the synchronous motor is acting as a driver motor for a compressor, the driver motor may already be loaded due to the settle-out pressure of the compressor. Such start-up loads may be in excess of 20 MW for large compressors, for instance those compressors requiring 30 MW driver motors.

Under such circumstances, a variable speed drive system (VSDS) 240 (also called a variable frequency drive system) can be used to start-up large driver motors. The VSDS 240 is electrically connected to the PPS distribution system 230 and the synchronous motors 250a, b, c. The VSDS 240 provides an alternative route to power the motors.

The VSDS 240 changes the frequency of the power supplied by the PPS electrical generators 210a, b, c to provide power at a varying applied frequency to one or more of the synchronous motors 250a, b, c. The VSDS 240 can thus supply the synchronous motors 250a, b, c with power at a variable frequency, in order to bring the motor form rest to its operating speed, e.g. 3600 rpm at 60 Hz.

The VSDS 240 can be selected from a current source inverter or a voltage source inverter. Current source inverters are preferred for use with synchronous motors as described in the embodiments of Figures 2a-d. Although not essential, voltage source inverters can be used with asynchronous motors, such as those discussed in relation to the embodiment of Figure 1.

In one embodiment, when changing the frequency of the power supplied to the synchronous motor 250a, b, the VSDS 240 can maintain a constant ratio of the applied frequency to the applied voltage, within minimum and maximum operating limits.

Once the synchronous electric motors 250a, b, c have been brought to their designed operating speed by VSDS 240,PPS consumer distribution switches 235a, b, c can be closed, connecting the synchronous motors directly to PPS distribution system 230. Thus, at full load, synchronous electric motors 250a, b, c can draw power directly from the PPS distribution system 230. The VSDS 240 can then be powered down.

It will be apparent that depending upon the available power capacity of the PPS 200, the synchronous motors 250a, b, c may be started individually or together. The skilled person will realise that multiple VSDS 240 may be provided, for example one VSDS 240 dedicated to each synchronous motor 250a, b, c.

The provision of the VSDS 240 and synchronous motors 250a, b, c in a power system electrically segregated from the essential power system 100 is advantageous because the VSDS 240 may generate high order harmonic distortions and commutation notching of the alternating voltage/frequency in the plant power system 200. Such frequency and voltage distortions can produce a dirty grid unsuitable for the provision of electrical power to some devices.

Thus, in one aspect where the synchronous motor is acting as a driver motor for a compressor, a method of starting up a compressor in an off-shore structure 1 as described herein is provided comprising at least the step of powering the at least one synchronous electric motor 250 from rest to operating speed using a variable speed drive system 240.

Figure 2a shows the simplest embodiment in which VSDS 240 is connected directly to the PPS distribution system 230 and synchronous motors 250a, b, c.

Figures 2b-c show alterative embodiments in which a transformer is present between one or both of i) the PPS distribution system 230 and VSDS 240 (the so-called "line-side") and ii) the VSDS 240 and synchronous motors 250a, b, c (the so-called "motor-side"). The presence of a transformer can act as a filter to mitigate the higher order harmonic distortions produced by the VSDS 240 by phase shifting.

The embodiment of Figure 2b places a first 3-winding transformer 270 between PPS distribution system 230 and VSDS 240.

The embodiment of Figure 2c is similar to that of the embodiment of Figure 2b, but additionally places a second 3-winding transformer 280 between the VSDS 240 and the synchronous motors 250a, b, c. The second 3-winding transformer 280 can provide the requisite operating voltage for the synchronous motors 250a, b, c.

In a preferred embodiment, the plant power system 200 can supply power to the devices of production facility on board the off-shore structure.

For instance, the off-shore structure may provide a method of cooling a hydrocarbon stream, such as a natural gas stream, comprising at least the steps of:
(a) providing one or more hydrocarbon streams and one or more refrigerant streams, wherein the one or more refrigerant streams are in one or more refrigerant circuits, each refrigerant circuit comprising one or more compressors, one or more coolers, one or more expansion devices, and one or more heat exchangers;
(b) compressing at least a fraction of the one or more refrigerant streams in the one or more compressors to provide one or more compressed refrigerant streams;
(c) mechanically driving said one or more compressors with an electric motor driver, said electric motor driver being an at least one PPS consumer as described herein;
(d) cooling the one or more compressed refrigerant streams to provide one or more cooled refrigerant streams;
(e) expanding at least a fraction of the one or more cooled refrigerant streams in the one or more expansion devices to provide one or more expanded refrigerant streams; and
(f) heat exchanging the one or more expanded refrigerant streams against the one or more hydrocarbon streams in the one or more heat exchangers to provide one or more at least partly evaporated refrigerant streams and one or more cooled hydrocarbon streams; and
(g) passing the one or more cooled hydrocarbon streams downstream to a plurality of storage tanks.

The hydrocarbon stream may be any suitable gas stream to be cooled, preferably liquefied, but is preferably a natural gas stream obtained from natural gas or petroleum reservoirs.

Usually a natural gas stream is comprised substantially of methane. Preferably the hydrocarbon feed stream comprises at least 50 mol% methane, more preferably at least 80 mol% methane.

Depending on the source, hydrocarbon compositions such as natural gas may contain varying amounts of hydrocarbons heavier than methane such as in particular ethane, propane and the butanes, and possibly lesser amounts of pentanes and aromatic hydrocarbons. The composition varies depending upon the type and location of the gas.

Conventionally, the hydrocarbons heavier than methane are removed as far as efficiently possible prior to any significant cooling of the hydrocarbon stream for several reasons, such as having different freezing or liquefaction temperatures that may cause them to block parts of a methane liquefaction plant.

Hydrocarbon sources such as natural gas may also contain non-hydrocarbons such as H₂O, N₂, CO₂, Hg, H₂S and other sulphur compounds, and the like. If necessary, the hydrocarbon source such as natural gas may be pretreated before cooling and liquefying. This pre-treatment may comprise reduction and/or removal of undesired components such as CO₂ and H₂S. As these steps are well known to the person skilled in the art, their mechanisms are not further discussed here.

The off-shore structure described herein may or may not contain a pre-treatment unit to:
- reduce the concentration of hydrocarbons heavier than methane; and/or
- reduce the concentration of non-hydrocarbons.

Thus, the off-shore structure may optionally comprise one or more pre-treatment units selected from the group comprising: acid gas removal, dehydration, and Natural Gas Liquid extraction. In the FLSO concept, any such pre-treatment, if necessary, is carried out at a location different from the off-shore structure, such as an on-shore location, for instance a hydrocarbon pre-treatment facility. Such pre-treatment units are preferably at least 2 km, more preferably at least 10 km distant from the off-shore structure. In the FLNG concept, such pre-treatment units may be located on the off-shore structure as required by the natural gas composition.

Thus, the term "hydrocarbon stream" as used herein represents a composition after treatment, such treatment including acid gas removal, dehydration, and Natural Gas Liquid extraction, which may or may not occur on the off-shore structure.

The hydrocarbon stream is thus a composition having been, as necessary, partly, substantially or wholly treated for the reduction and/or removal of one or more compounds or substances, including but not limited to sulphur, sulphur compounds, carbon dioxide, water, Hg, and one or more C2+ hydrocarbons.

The hydrocarbon stream is cooled in one or more cooling stages in which the hydrocarbon stream is passed against one or more refrigerant streams in one or more refrigerant circuits to provide cooled hydrocarbon in one or more cooled hydrocarbon streams and one or more at least partly evaporated refrigerant streams.

In a preferred embodiment, the hydrocarbon stream can be cooled against a mixed refrigerant in mixed refrigerant circuit. More preferably, the hydrocarbon stream can be cooled against two or more fractions of the mixed refrigerant. The mixed refrigerant circuit can comprise one or more compressors to compress the mixed refrigerant. The compressors can be driven by one or more electrical driver motors. These driver motors may be, for example, synchronous or asynchronous motors, operating as plant power system consumers as described above.

The hydrocarbon stream can be cooled in one or more first heat exchangers, to provide a first cooled, preferably partially liquefied, hydrocarbon stream, preferably at a temperature below 0 °C.

Preferably, any such first heat exchangers could comprise a first cooling stage. One or more second heat exchangers can be provided to further cool, preferably liquefy a fraction of the hydrocarbon stream in one or more second cooling stages.

In this way, the off-shore structure disclosed herein may involve two or more cooling stages, each stage having one or more steps, parts etc.. For example, each cooling stage may comprise one to five heat exchangers. The or a fraction of a hydrocarbon stream and/or the mixed refrigerant may not pass through all, and/or all the same, the heat exchangers of a cooling stage.

In one embodiment, the hydrocarbon cooling, preferably liquefying, method comprises two or three cooling stages. A first cooling stage is preferably intended to reduce the temperature of a hydrocarbon stream to below 0 °C, usually in the range -20 °C to -70 °C to provide a first cooled hydrocarbon stream. Such a first cooling stage is sometimes also termed a 'pre-cooling' stage.

Any second cooling stage is preferably separate from the first cooling stage. That is, the second cooling stage comprises one or more separate heat exchangers. Such a second cooling stage is sometimes also termed a 'main cooling' stage.

A second cooling stage is preferably present to reduce the temperature of a first cooled hydrocarbon stream to provide a second cooled hydrocarbon stream, which can be at a temperature below -100°C. Preferably the second cooled hydrocarbon stream is a liquefied hydrocarbon stream, such as a LNG stream. If the second cooled hydrocarbon stream is a LNG stream, it is preferred that it is "on-specification" i.e. that the LNG has the desired composition for a particular export market.

Heat exchangers for use as the one or more first or the one or more second heat exchangers are well known in the art. At least one of the second heat exchangers is preferably a spool-wound cryogenic heat exchanger known in the art. Optionally, a heat exchanger could comprise one or more cooling sections within its shell, and each cooling section could be considered as a cooling stage or as a separate 'heat exchanger' to the other cooling locations.

In yet another embodiment, one or more fractions of the mixed refrigerant stream are passed through one or more heat exchangers, preferably two or more of the first and second heat exchangers described hereinabove, to provide one or more cooled mixed refrigerant streams.

The mixed refrigerant of the mixed refrigerant circuit may be formed from a mixture of two or more components selected from the group comprising: nitrogen, methane, ethane, ethylene, propane, propylene, butanes, pentanes, etc.. The method disclosed herein may involve the use of one or more other refrigerants, in separate or overlapping refrigerant circuits or other cooling circuits.

In one embodiment disclosed herein, the method of cooling, preferably liquefying, a hydrocarbon stream comprises one refrigerant circuit comprising one mixed refrigerant.

A mixed refrigerant or a mixed refrigerant stream as referred to herein comprises at least 5 mol% of two different components. A common composition for a mixed refrigerant can be:

| | |
|---|---|
| Nitrogen | 0-10 mol% |
| Methane (C1) | 30-70 mol% |
| Ethane (C2) | 30-70 mol% |
| Propane (C3) | 0-30 mol% |
| Butanes (C4) | 0-15 mol% |

The total composition comprises 100 mol%.

In another embodiment, the method is for liquefying natural gas to provide liquefied natural gas.

The cooled, preferably liquefied, hydrocarbon stream provided herein is stored in a one or more storage tanks, which storage tanks may be located on the off-shore structure.

Further, the person skilled in the art will readily understand that after any liquefaction, the liquefied hydrocarbon stream may be further processed, if desired. As an example, the obtained LNG may be depressurized by means of a Joule-Thomson valve or by means of a cryogenic turbo-expander.

The liquefied hydrocarbon stream can be passed through an end gas/liquid separator such as an end-flash vessel to provide an end-flash gas stream overhead and a liquid bottom stream, which can be stored in a plurality of storage tanks as the liquefied product such as LNG, as discussed above.

The end-flash gas can be compressed in an end compressor and provided as fuel gas to units consuming fuel gas on the off-shore structure. For instance, the fuel gas can be used to power Dual Fuel Engines and/or gas turbines, such as aero-type turbines, to power the power system generators to produce electricity for the off-shore structure.

The off-shore structure and cooling method disclosed herein can provide a nominal capacity (or name plate) of a liquefied hydrocarbon stream in the range of greater than 1.0 million (metric) tonnes per annum (MTPA), more preferably greater than or equal to 1.3 MPTA, even more preferably about 2.0 MTPA. The term "nominal capacity" is defined at the daily production capacity of the vessel multiplied by the number of days per years the vessel is intended to be in operation. For instance, some LNG plants are intended to be operational for an average of 345 days per year. Preferably the nominal capacity of the hydrocarbon cooling method disclosed herein is in the range of 1 < to ≤ 2 MTPA.

The cooled hydrocarbon can be periodically unloaded from the off-shore structure, for instance to a carrier vessel, such as a LNG carrier.

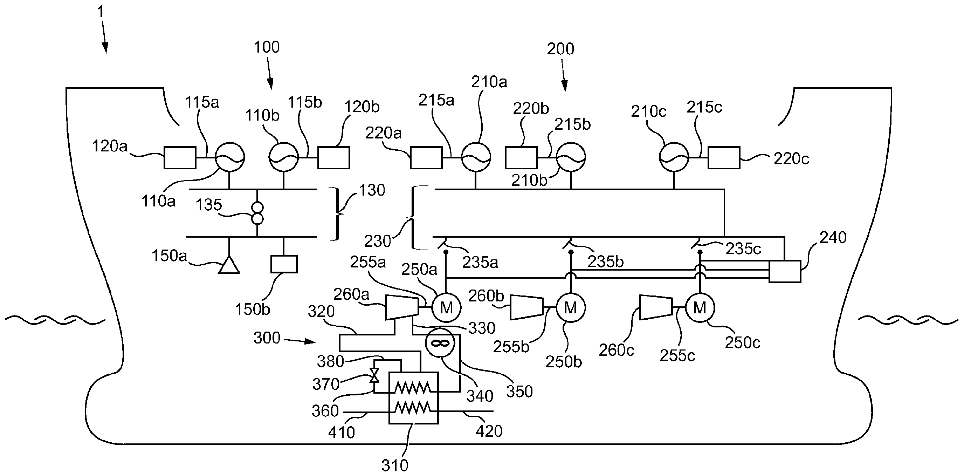

Figure 3 shows a simplified schematic diagram of an off-shore structure 1, comprising essential power system 100, plant power system 200 and refrigerant circuit 300, used in the liquefaction of natural gas to provide LNG. For simplicity, the remaining units in the liquefaction facility have been omitted. These are known to the skilled person.

In the embodiment shown, the essential power system 100 comprises two EPS electrical generators 110a, 110b, each mechanically driven by an EPS driver 120a, b via EPS generator drive shaft 115a. b.

The EPS distribution system 130, which provides an electrical connection between the EPS electrical generators 110a, b and the two EPS consumers 150a, b may comprise one or more EPS transformers 135. A single 2-winding transformer 135 is shown in Figure 3. The one or more EPS transformers can act as an electrical filter between the EPS generators 110a, b and EPS consumers 150a, b to reduce any fluctuations in the frequency and voltage of the power system to maintain a clean grid.

The plant power system 200 is identical to that described for the embodiment of Figure 2a. In the embodiment of Figure 3, the PPS consumers 250a, b, c, which can be synchronous electric motors, are used to drive compressors 260a, b, c via compressor drive shafts 255a, b, c.

The compressors 260a, b, c may be refrigerant compressors which are part of one or more refrigerant circuits. A single refrigerant circuit 300 is shown in Figure 2, further comprising one or more coolers 340, one or more heat exchangers 310 and one or more expansion devices 370.

The compressor 260a compresses a refrigerant stream 320 to provide a compressed refrigerant stream 330. The compressed refrigerant stream 330 can be cooled in cooler 340, such as an air or water cooler, to provide a first cooled refrigerant stream 350. The first cooled refrigerant stream 350 can then be passed to heat exchanger 310, where it is self-cooled to provide second cooled refrigerant stream 360.

The heat exchanger 310 may be a pre-cooling (or first stage) heat exchanger or a main (or second stage) heat exchanger. If the heat exchanger 310 is a main heat exchanger it is preferred that it is a spool wound heat exchanger. The first cooled refrigerant stream 350 can be held in a plurality of tubes in the heat exchanger 310 and cooled against expanded refrigerant in a shell side of the heat exchanger.

The second cooled refrigerant stream 360 can be expanded in one or more expansion devices 370, such as a Joule-Thomson valve, to provide an expanded refrigerant stream 380. Expanded refrigerant stream 380 can be passed to the shell side of heat exchanger 310 where it is heat exchanged against a hydrocarbon stream 410 to provide a cooled hydrocarbon stream and at least partly evaporated refrigerant.

The at least partly evaporated refrigerant can be withdrawn from the heat exchanger 310 and passed to the refrigerant compressor 260a as refrigerant stream 320, completing the refrigerant circuit 300.

In a preferred embodiment, the hydrocarbon stream 410 may be a natural gas stream, and the cooled hydrocarbon stream 420 may be a liquefied natural gas stream.

The person skilled in the art will understand that the scope of the present invention is defined by the appended claims.

## Claims

1. An off-shore structure (1) comprising at least:
(i) an essential power system (100) for supplying power to at least one essential power system consumer (150), wherein the at least one essential power system consumer is sensitive to one or both of voltage and frequency fluctuations and comprising at least one essential power system electrical generator (110) electrically connected to an essential power system distribution system (130) to which the at least one essential power system consumer (150) is electrically connected; and
(ii) a plant power system (200) for supplying power to at least one plant power system consumer (250), wherein the at least one plant power system consumer is likely to cause excessive variations in one or both of the voltage and frequency, the plant power system (200) comprising at least one plant power system electrical generator (210) electrically connected to a plant power system distribution system (230), to which the at least one plant power system consumer (250) is electrically connected
wherein the essential power system (100) is electrically segregated from the plant power system (200), and the essential power system (100) and the plant power system (200) have no electrical connection or inter-connection, such that there is no possibility for power transfer between the essential power system (100) and the plant power system (200).

2. The off-shore structure (1) according to claim 1, wherein the ratio of total power generated by the at least one plant power system electrical generator (210) to the total power consumed by the at least one plant power system consumer (250) is less than or equal to 1.4.

3. The off-shore structure (1) according to claim 1 or claim 2 wherein one or both of the at least one essential power system electrical generator (110) and at least one plant power system electrical generator (210) are driven by a prime mover, including one or more of the group comprising dual fuel engines, gas turbines and steam turbines (120, 220).

4. The off-shore structure (1) according to any of the preceding claims wherein the at least one plant power system consumer (250) comprises at least one compressor electric driver (250), each said at least one compressor electric driver mechanically connected to a compressor (260).

5. The off-shore structure (1) according to claim 4 wherein the at least one compressor electric driver (250) is a two pole electric motor.

6. The off-shore structure (1) according to claim 4 or claim 5 wherein said compressor (260) is a refrigerant compressor in a refrigerant circuit (300), said refrigerant circuit having a refrigerant and further comprising a heat exchanger (310) in which the refrigerant is heat exchanged against a hydrocarbon stream (410) to provide a cooled hydrocarbon stream (420).

7. The off-shore structure (1) according to claim 6 wherein the hydrocarbon is natural gas and the cooled hydrocarbon is liquefied natural gas.

8. The off-shore structure (1) according to any of claims 4 to 7, wherein the plant power system (200) further comprises a variable speed drive system (240) electrically connecting the plant power system distribution system (230) to the at least one compressor electric driver (250).

9. The off-shore structure (1) according to claim 8, wherein the variable speed drive system (240) is selected from the group comprising a current source inverter and a voltage source inverter.

10. The off-shore structure (1) according to claim 8 or 9, further comprising one or more transformers (270, 280, 290, 295) between one or both of (i) the plant power system electrical generator (210) and the variable speed drive system (240) and (ii) the variable speed drive system (240) and the plant power system distribution system (230).

11. The off-shore structure (1) according to any one of claims 8 to 10, wherein said at least one compressor electric driver (250) is a synchronous electric motor.

12. The off-shore structure (1) according to any one of claims 4 to 10, wherein said at least one compressor electric driver (250) is an asynchronous electric motor.

13. A method of powering an off-shore structure (1) comprising at least the steps of:
- providing a structure intended for off-shore use, such as a vessel, platform or caisson;
- providing said structure with an essential power system (100), said essential power system (100) comprising at least one essential power system electrical generator (110) electrically connected to an essential power system distribution system (130), said essential power system distribution system (130) electrically connected to at least one essential power system consumer (150);
- providing said structure with a plant power system (200), said plant power system (200) comprising at least one plant power system electrical generator (210) electrically connected to a plant power system distribution system (230), said plant power system distribution system (230) electrically connected to at least one plant power system consumer (250);
- segregating the essential power system (100) from the plant power system (200), wherein the two electrically segregated power systems have no electrical connection or inter-connection, such that there is no possibility for power transfer between the essential power system (100) and the plant power system (200); - supplying power to at least one essential power system consumer (150), wherein the at least one essential power system consumer is sensitive to one or both of voltage and frequency fluctuations, and - supplying power to at least one plant power system consumer (250), wherein the at least one plant power system consumer is likely to cause excessive variations in one or both of the voltage and frequency.

## Patentansprüche

1. Offshore-Struktur (1), die wenigstens Folgendes umfasst:
(i) ein wesentliches Stromversorgungssystem (100) zum Liefern von Strom an wenigstens einen Verbraucher (150) eines wesentlichen Stromversorgungssystems, wobei der wenigstens eine Verbraucher des wesentlichen Stromversorgungssystems auf Spannungs- und/oder Frequenzschwankungen empfindlich reagiert, und das wenigstens einen elektrischen Generator (110) für ein wesentliches Stromversorgungssystem umfasst, der leitend mit einem Verteilungsnetz (130) für ein wesentliches Stromversorgungssystem verbunden ist, mit dem der wenigstens eine Verbraucher (150) des wesentlichen Stromversorgungssystems leitend verbunden ist; und
(ii) ein Anlagenstromversorgungssystem (200) zum Liefern von Strom an wenigstens einen Verbraucher (250) eines Anlagenstromversorgungssystems, wobei der wenigstens eine Verbraucher des Anlagenstromversorgungssystems wahrscheinlich übermäßige Abweichungen in der Spannung und/oder der Frequenz verursacht, wobei das Anlagenstromversorgungssystem (200) wenigstens einen elektrischen Generator (210) für ein Anlagenstromversorgungssystem umfasst, der leitend mit einem Verteilungsnetz (230) für ein Anlagenstromversorgungssystem verbunden ist, mit dem der wenigstens eine Verbraucher (250) des Anlagenstromversorgungssystems leitend verbunden ist;
wobei das wesentliche Stromversorgungssystem (100) leitend von dem Anlagenstromversorgungssystem (200) getrennt ist und das wesentliche Stromversorgungssystem (100) und das Anlagenstromversorgungssystem (200) keine leitende Verbindung oder Querverbindung derart aufweisen, dass keine Möglichkeit einer Stromübertragung zwischen dem wesentlichen Stromversorgungssystem (100) und dem Anlagenstromversorgungssystem (200) besteht.

2. Offshore-Struktur (1) nach Anspruch 1, wobei das Verhältnis der von dem wenigstens einen elektrischen Generator (210) für das Anlagenstromversorgungssystem erzeugten Gesamtleistung zu der von dem wenigstens einen Verbraucher (250) des Anlagenstromversorgungssystems verbrauchten Gesamtleistung höchstens 1,4 ist.

3. Offshore-Struktur (1) nach Anspruch 1 oder 2, wobei der wenigstens eine elektrische Generator (110) für das wesentliche Stromversorgungssystem und/oder der wenigstens eine elektrische Generator (210) für das Anlagenstromversorgungssystem von einer Antriebsmaschine angetrieben werden, einschließlich eines oder mehr aus der Gruppe, die Zweistoffmotoren, Gasturbinen und Dampfturbinen (120, 220) umfasst.

4. Offshore-Struktur (1) nach einem der vorhergehenden Ansprüche, wobei der wenigstens eine Verbraucher (250) des Anlagenstromversorgungssystems wenigstens einen elektrischen Kompressortreiber (250) umfasst, wobei jeder der wenigstens einen elektrischen Kompressortreiber mechanisch mit einem Kompressor (260) verbunden ist.

5. Offshore-Struktur (1) nach Anspruch 4, wobei der wenigstens eine elektrische Kompressortreiber (250) ein zweipoliger Elektromotor ist.

6. Offshore-Struktur (1) nach Anspruch 4 oder 5, wobei der Kompressor (260) ein Kältemittelkompressor in einem Kältemittelkreislauf (300) ist, wobei der Kältemittelkreislauf ein Kältemittel aufweist und ferner einen Wärmetauscher (310) umfasst, in dem das Kältemittel gegen einen Kohlenwasserstoffstrom (410) wärmeausgetauscht wird, um einen gekühlten Kohlenwasserstoffstrom (420) bereitzustellen.

7. Offshore-Struktur (1) nach Anspruch 6, wobei der Kohlenwasserstoff Erdgas und der gekühlte Kohlenwasserstoff Flüssigerdgas ist.

8. Offshore-Struktur (1) nach Anspruch 4 bis 7, wobei das Anlagenstromversorgungssystem (200) ferner ein drehzahlvariables Antriebssystem (240) umfasst, das das Verteilungsnetz (230) für ein Anlagenstromversorgungssystem leitend mit dem wenigstens einen elektrischen Kompressortreiber (250) verbindet.

9. Offshore-Struktur (1) nach Anspruch 8, wobei das drehzahlvariable Antriebssystem (240) aus der Gruppe ausgewählt ist, die einen Stromquellen-Wechselrichter und einen Spannungsquellen-Wechselrichter umfasst.

10. Offshore-Struktur (1) nach Anspruch 8 oder 9, ferner umfassend einen oder mehrere Transformatoren (270, 280, 290, 295) zwischen (i) dem elektrischen Generator (210) für das Anlagenstromversorgungssystem und dem drehzahlvariablen Antriebssystem (240) und/oder (ii) dem drehzahlvariablen Antriebssystem (240) und dem Verteilungsnetz (230) für das Anlagenstromversorgungssystem.

11. Offshore-Struktur (1) nach einem der Ansprüche 8 bis 10, wobei der wenigstens eine elektrische Kompressortreiber (250) ein elektrischer Synchronmotor ist.

12. Offshore-Struktur (1) nach einem der Ansprüche 4 bis 10, wobei der wenigstens eine elektrische Kompressortreiber (250) ein elektrischer Asynchronmotor ist.

13. Verfahren zum Versorgen einer Offshore-Struktur (1) mit Strom, das wenigstens die folgenden Schritte umfasst:
- Bereitstellen einer für eine Offshore-Verwendung bestimmten Struktur, wie etwa eines Schiffs, einer Plattform oder eines Senkkastens;
- Bereitstellen eines wesentlichen Stromversorgungssystems (100) an die Struktur, wobei das wesentliche Stromversorgungssystem (100) wenigstens einen elektrischen Generator (110) für das wesentliche Stromversorgungssystem umfasst, der leitend mit einem Verteilungsnetz (130) für ein wesentliches Stromversorgungssystem verbunden ist, wobei das wenigstens eine Verteilungsnetz (130) eines wesentlichen Stromversorgungssystems leitend mit wenigstens einem Verbraucher (150) des wesentlichen Stromversorgungssystems verbunden ist;
- Bereitstellen eines Anlagenstromversorgungssystems (200) an die Struktur, wobei das Anlagenstromversorgungssystem (200) wenigstens einen elektrischen Generator (210) für das Anlagenstromversorgungssystem umfasst, der leitend mit einem Verteilungsnetz (230) für ein Anlagenstromversorgungssystem verbunden ist, wobei das Verteilungsnetz (230) eines Anlagenstromversorgungssystems leitend mit wenigstens einem Verbraucher (250) des Anlagenstromversorgungssystems verbunden ist;
- Trennen des wesentlichen Stromversorgungssystems (100) von dem Anlagenstromversorgungssystem (200), wobei die zwei leitend getrennten Stromversorgungssysteme derart keine leitende Verbindung oder Querverbindung aufweisen, dass keine Möglichkeit einer Stromübertragung zwischen dem wesentlichen Stromversorgungssystem (100) und dem Anlagenstromversorgungssystem (200) besteht;
- Liefern von Strom an wenigstens einen Verbraucher (150) des wesentlichen Stromversorgungssystems, wobei der wenigstens eine Verbraucher des wesentlichen Stromversorgungssystems auf Spannungs- und/oder Frequenzschwankungen empfindlich reagiert, und
- Liefern von Strom an wenigstens einen Verbraucher (250) des Anlagenstromversorgungssystems, wobei der wenigstens eine Verbraucher des Anlagenstromversorgungssystems wahrscheinlich übermäßige Abweichungen in der Spannung und/oder der Frequenz verursacht.

## Revendications

1. Structure off-shore (1) comprenant au moins :
(i) un système d'alimentation essentiel (100) destiné à alimenter au moins un consommateur de système d'alimentation essentiel (150), dans lequel ledit consommateur de système d'alimentation essentiel est sensible aux fluctuations de tension et de fréquence, ou les deux, et comprend au moins un générateur électrique (110) de système d'alimentation essentiel connecté électriquement à un système de distribution de système d'alimentation essentiel (130) auquel ledit consommateur de système d'alimentation essentiel (150) est connecté électriquement ; et
(ii) un système d'alimentation d'installation (200) destiné à alimenter au moins un consommateur de système d'alimentation d'installation (250), dans lequel ledit consommateur de système d'installation est susceptible de provoquer des variations excessives de la tension ou de la fréquence, ou les deux, le système d'alimentation d'installation (200) comprenant au moins un générateur électrique de système d'alimentation d'installation (210) connecté électriquement à un système de distribution de système d'alimentation d'installation (230), auquel ledit consommateur de système d'alimentation d'installation (250) est connecté électriquement ;
dans lequel le système d'alimentation essentiel (100) est séparé électriquement du système d'alimentation d'installation (200), et le système d'alimentation essentiel (100) et le système d'alimentation d'installation (200) n'ont pas de connexion ou d'interconnexion électrique, de sorte qu'il n'y a pas possibilité de transfert d'énergie entre le système d'alimentation essentiel (100) et le système d'alimentation d'installation (200).

2. Structure off-shore (1) selon la revendication 1, dans laquelle le rapport de l'énergie totale générée par ledit générateur électrique de système d'alimentation d'installation (210) sur l'énergie totale consommée par ledit consommateur de système d'alimentation d'installation (250) est inférieur ou égal à 1,4.

3. Structure off-shore (1) selon la revendication 1 ou la revendication 2, dans laquelle au moins un ou deux desdits générateurs électriques de système d'alimentation essentiel (110) et au moins un générateur électrique de système d'alimentation d'installation (210) est entraîné par un appareil moteur, comprenant un ou plusieurs du groupe comprenant les moteurs bicarburant, les turbines à gaz et les turbines à vapeur (120, 220).

4. Structure off-shore (1) selon l'une quelconque des revendications précédentes, dans laquelle ledit consommateur de système d'alimentation d'installation (250) comprend au moins un moteur électrique de compresseur (250), chacun desdits moteurs électriques de compresseur étant raccordé mécaniquement à un compresseur (260).

5. Structure off-shore (1) selon la revendication 4, dans laquelle ledit moteur électrique de compresseur (250) est un moteur électrique à deux pôles.

6. Structure off-shore (1) selon la revendication 4 ou 5, dans laquelle ledit compresseur (260) est un compresseur de réfrigérant dans un circuit de réfrigérant (300), ledit circuit de réfrigérant ayant un réfrigérant et comprenant en outre un échangeur de chaleur (310) dans lequel le réfrigérant est échangé thermiquement contre un courant d'hydrocarbures (410) pour fournir un courant d'hydrocarbures refroidi (420).

7. Structure off-shore (1) selon la revendication 6, dans laquelle l'hydrocarbure est du gaz naturel et l'hydrocarbure refroidi est du gaz naturel liquéfié.

8. Structure off-shore (1) selon l'une quelconque des revendications 4 à 7, dans laquelle le système d'alimentation d'installation (200) comprend en outre un système d'entraînement à vitesse variable (240) connectant électriquement le système de distribution de système d'alimentation d'installation (230) audit moteur électrique de compresseur (250).

9. Structure off-shore (1) selon la revendication 8, dans laquelle le système d'entraînement à vitesse variable (240) est choisi dans le groupe comprenant un onduleur de source de courant et un onduleur de source de tension.

10. Structure off-shore (1) selon la revendication 8 ou 9, comprenant en outre un ou plusieurs transformateurs (270, 280, 290, 295) entre un ou les deux parmi (i) le générateur électrique de système d'alimentation d'installation (210) et le système d'entraînement de vitesse variable (240) et (ii) le système d'entraînement à vitesse variable (240) et le système de distribution du système d'alimentation d'installation (230).

11. Structure off-shore (1) selon l'une quelconque des revendications 8 à 10, dans laquelle ledit moteur électrique de compresseur (250) est un moteur électrique synchrone.

12. Structure off-shore (1) selon l'une quelconque des revendications 4 à 10, dans laquelle ledit moteur électrique de compresseur (250) est un moteur électrique asynchrone.

13. Procédé d'alimentation d'une structure off-shore (1) comprenant au moins les étapes consistant à :
- fournir une structure destinée à être utilisée off-shore, telle qu'un navire, une plate-forme ou un ponton ;
- fournir à ladite structure un système d'alimentation essentiel (100), ledit système d'alimentation essentiel (100) comprenant au moins un générateur électrique de système d'alimentation essentiel (110) connecté électriquement à un système de distribution de système d'alimentation essentiel (130), ledit système de distribution de système d'alimentation essentiel (130) étant connecté électriquement à au moins un consommateur de système d'alimentation essentiel (150) ;
- fournir à ladite structure un système d'alimentation d'installation (200), ledit système d'alimentation d'installation (200) comprenant au moins un générateur électrique de système d'alimentation d'installation (210) connecté électriquement à un système de distribution de système d'alimentation d'installation (230), ledit système de distribution de système d'alimentation d'installation (230) étant connecté électriquement à au moins un consommateur de système d'alimentation d'installation (250) ;
- séparer le système d'alimentation essentiel (100) du système d'alimentation d'installation (200), dans lequel les deux systèmes d'alimentation séparés électriquement n'ont pas de connexion ou d'interconnexion électrique, de sorte qu'il n'y a aucune possibilité de transfert d'énergie entre le système d'alimentation essentiel (100) et le système d'alimentation d'installation (200) ;
- alimenter au moins un consommateur de système d'alimentation essentiel (150), dans lequel ledit consommateur de système d'alimentation essentiel est sensible aux fluctuations de tension et de fréquence, ou les deux, et
- fournir de l'énergie à au moins un consommateur de système d'alimentation d'installation (250), dans lequel ledit consommateur de système d'alimentation d'installation est susceptible de provoquer des variations excessives de la tension et de la fréquence, ou les deux.
